# FASCICULE DE BREVET EUROPEEN

(11) **EP 0 842 843 B1**
(45) Date de publication et mention de la délivrance du brevet: **15.05.2002**
(21) Numéro de dépôt: 97402737.7
(22) Date de dépôt: 14.11.1997
(51) Int. Cl.: B62D 55/28

(54) **Dispositif de fixation d'une semelle sur le corps d'un maillon de chenille**
Vorrichtung zum Befestigen einer Bodenplatte auf dem Körper eines Gleiskettengliedes
Device for mounting a street plate on the body of a track link

(30) Priorité: 15.11.1996 FR 9613991
(43) Date de publication de la demande: 20.05.1998
(73) Titulaire: GIAT INDUSTRIES, 78000 Versailles (FR)
(72) Inventeur: Fer, Jean-Michel, 78340 Les Clayes sous Bois (FR)

(56) Documents cités:
- CH-A- 396 665
- DE-A- 3 025 840
- DE-A- 3 400 702

## Description

Le domaine technique de la présente invention est celui des chenilles pour engins blindés par exemple, et concerne plus particulièrement les moyens de fixation d'une semelle sur le corps d'un maillon de chenille.

La fixation d'une semelle sur un corps d'un maillon de chenille est réalisée de façon connue en fixant une ou plusieurs vis entre les parties métalliques de la semelle et du corps. On pratique une ouverture pour introduire la vis jusqu'à la semelle. L'inconvénient de ce type de fixation réside dans le risque de desserrage et dans le grand nombre de vis pour fixer toutes les semelles de la chenille. De plus, la présence de boue rend difficile le remplacement rapide d'une semelle en raison de l'absence de propreté des filetages et des taraudages.

On connaît également la fixation de la semelle dans une glissière prévue sur le corps du maillon de chenille, ces deux éléments étant maintenus par une languette flexible. L'inconvénient de ce type de fixation réside dans la difficulté du démontage de la semelle en cas de déformation du corps, ce qui rend ainsi le remontage encore plus aléatoire.

Le brevet CH-A-396665, qui représente l'état de la technique le plus proche, décrit la fixation d'une semelle en caoutchouc sur le corps d'un maillon de chenille. La semelle est profilée pour comporter une rainure coopérant avec un bossage pour former un premier moyen de retenue. La semelle comporte un percement transversal recevant un axe pour constituer un second moyen de retenue. Ce brevet décrit donc une semelle équipée de deux moyens de retenue et implique la présence d'une goupille qui est une petite pièce dont la perte est facile.

Le brevet DE-A-3400702 décrit également la fixation d'une semelle sur un corps de chenille. La semelle comporte un rebord s'engageant dans une rainure du corps pour constituer un premeier moyen de retenue et un pion élastique dont la tête est immobilisée dans la semelle pour constituer un second moyen de retenue. Ce dispositif nécessite deux moyens de retenue. On notera que la matière élastique ne constitue pas un moyen de blocage.

Le brevet DE-A-3025840 décrit la fixation d'une semelle dans un corps de chenille. Le maintien de la semelle est obtenu par une concordance de forme qui implique que la semelle soit en appui dans le corps sur au moins deux côtés opposés pour que l'accrochage puisse être efficace. On définit donc dans ce brevet deux moyens de retenue.

Le but de la présente invention est de pallier les inconvénients des systèmes de fixation connus en proposant un dispositif de fixation ne nécessitant aucun outil particulier et qui est pratiquement insensible à la présence de boue sur les chenilles.

L'invention a donc pour objet un dispositif de fixation d'une semelle sur le corps d'un maillon de chenille, caractérisé en ce qu'il est constitué d'un moyen unique de retenue disposé au niveau de la semelle coopérant avec un logement pratiqué au niveau du corps, et d'un moyen de blocage fixant le moyen de retenue dans le logement.

D'une manière générale, le moyen de blocage est constitué par une fourchette coulissant dans une lumière pratiquée dans le corps ou la semelle.

Selon un autre exemple de réalisation, la lumière est pratiquée dans le corps sous la forme d'un évidement borgne délimitant une butée au voisinage du logement, et une rampe.

Selon un exemple de réalisation, le moyen de retenue est constitué par un doigt épaulé et le logement est prolongé par un puits sur lequel l'extrémité du doigt épaulé vient en appui.

D'une manière générale, le corps est muni d'un passage recevant un outil d'extraction du moyen de blocage.

Un avantage de l'invention réside dans la facilité du montage et du démontage de chaque semelle de la chenille sans qu'il soit nécessaire d'avoir des connaissances particulières pour effectuer ces opérations.

Un autre avantage de l'invention réside dans une réalisation simple des interfaces de fixation.

D'autres avantages, caractéristiques et détails de l'invention ressortiront à la lecture du complément de description qui va suivre en relation avec des dessins donnés à titre d'exemple et sur lesquels :
- la figure 1 est une vue d'ensemble des éléments constituant une moitié d'un patin de chenille,
- la figure 2 est une vue en coupe montrant les interfaces de l'assemblage, et
- la figure 3 est une vue en coupe de la semelle assemblée.

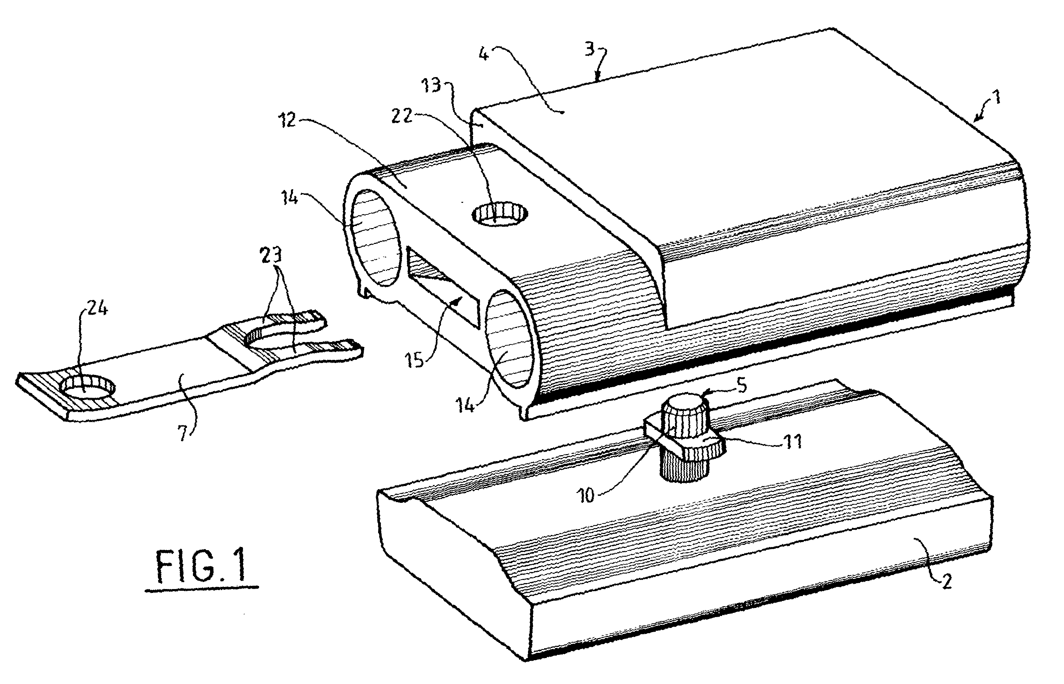

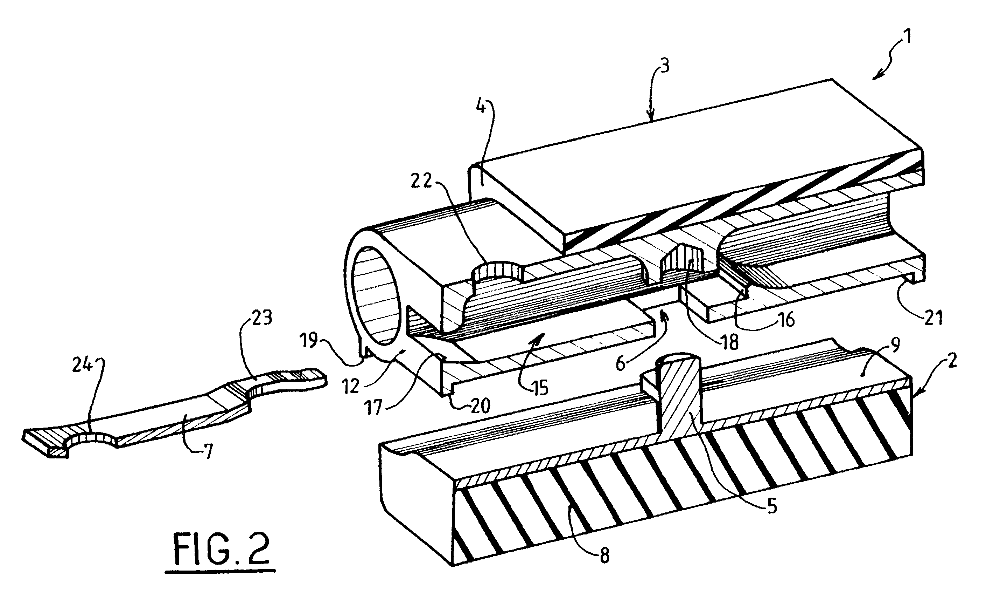

Une chenille pour engin blindé est composée d'un ensemble de patins 1 constitués chacun d'une semelle caoutchoutée 2 sur laquelle roule l'engin, et d'un corps 3 recevant la semelle 2 et présentant une surface 4 de roulement caoutchoutée des roues de barbotin. Sur les figures 1 et 2, on a représenté une moitié de patin qui est munie d'un dispositif de fixation selon l'invention.

Le dispositif de fixation est constitué d'un moyen de retenue 5 fixé ici sur la semelle 2, d'un logement 6 pratiqué dans le corps 3 et d'un moyen de blocage 7 du moyen de retenue 5 dans le logement 6.

La semelle 2 est constituée d'une embase caoutchoutée 8 et d'un socle métallique 9 sur lequel est soudé le moyen de retenue 5 qui se présente sous la forme d'un doigt épaulé 10. Sur la figure 1, on voit que l'épaulement 11 s'étend de part et d'autre du doigt 10.

Le corps 3 est également constitué d'un socle métallique 12 et d'une plaque caoutchoutée 13. Le socle 12 est muni, d'une façon connue, de deux percements longitudinaux 14 recevant les axes adhérités du maillon, et présente une lumière 15 pratiquée longitudinalement. En variante, cette lumière 15 pourrait être disposée transversalement. La lumière 15 est réalisée sous la forme d'un évidement borgne limité d'un côté par une butée 16 placée au-delà du logement 6 et de l'autre côté par une rampe 17. Dans cet évidement, le logement 5 est prolongé par un puits 18 dans lequel l'extrémité du doigt 10 est encastrée et sur le bord duquel l'épaulement 11 vient en appui. Enfin le corps 3 du patin est prolongé par des lèvres 19, 20 et 21 qui délimitent une matrice de réception du socle 9 de la semelle 2. Un passage 22 est prévu pour permettre l'introduction d'un outil d'extraction du moyen de blocage 7.

Le moyen de blocage 7 est réalisé sous la forme d'une fourchette métallique flexible à deux branches 23. L'extrémité de cette fourchette est munie d'un trou 24 dans lequel l'outil d'extraction (non représenté) peut être introduit.

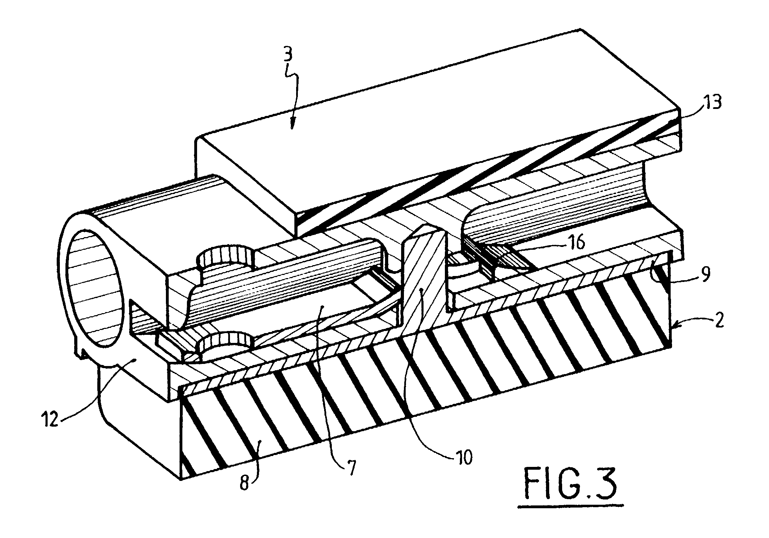

Sur la figure 3, on a représenté les trois éléments en position d'assemblage, position qui est obtenue en engageant le socle 9 de la semelle 2 dans la matrice du corps 3, le doigt 10 étant engagé dans le puits 18. Le corps 3 et la semelle 2 sont maintenus ensemble dans cette position par la fourchette 7 qui vient appliquer l'épaulement 11 contre le bord du puits 18. Un tel assemblage garantit la fixation de la semelle 2 au corps 3 en toute circonstance. Cette fixation assure une certaine flexibilité car les branches 23 de la fourchette présentent une courbure. On réalise ainsi un cintrage de cette fourchette par la rampe 17 et le bord du puits 18. La fourchette est donc emprisonnée entre la butée 16 et la rampe 17. Pour séparer la semelle 2 et le corps 3, il suffit de vaincre la rampe 17. A cette fin, on introduit un outil d'extraction dans le passage 22 après enlèvement de la boue éventuelle, pour l'engager dans le trou 24 et accrocher ainsi la fourchette 7.

## Revendications

1. Dispositif de fixation d'une semelle (2) sur le corps (3) d'un maillon de chenille, **caractérisé en ce qu'**il est constitué d'un moyen unique de retenue (5) disposé au niveau de la semelle coopérant avec un logement (6) pratiqué au niveau du corps (3), et d'un moyen de blocage (7) fixant le moyen de retenue (5) dans le logement (6).

2. Dispositif de fixation selon la revendication 1, **caractérisé en ce que** le moyen de blocage (7) est constitué par une fourchette (23) coulissant dans une lumière (15) pratiquée dans le corps (3) ou la semelle (2).

3. Dispositif de fixation selon la revendication 2, **caractérisé en ce que** la lumière (15) est pratiquée dans le corps (3) sous la forme d'un évidement borgne délimitant une butée (16) au voisinage du logement (6), et une rampe (17).

4. Dispositif de fixation selon la revendication 3, **caractérisé en ce que** le moyen de retenue (5) est constitué par un doigt épaulé (10).

5. Dispositif de fixation selon la revendication 4, **caractérisé en ce que** le logement (6) est prolongé par un puits (18) sur lequel l'extrémité du doigt épaulé (10) vient en appui.

6. Dispositif de fixation selon l'une quelconque des revendications précédentes, **caractérisé en ce que** le corps (3) est muni d'un passage (22) recevant un outil d'extraction du moyen de blocage.

## Claims

1. A device to fasten a pad (2) onto the body (3) of a track link, wherein it is constituted by a single retention means (5) arranged on the pad and co-operating with a housing (6) made in the body (3), and locking means (7) fastening the retention means (5) in the housing (6).

2. A fastening device according to Claim 1, wherein the locking means (7) are formed by a fork (23) sliding in a slot (15) made in the body (3) or the pad (2).

3. A fastening device according to Claim 2, wherein the slot (15) is made in the body (3) in the shape of a blind recess delimiting an abutment (16) in the vicinity of the housing (6), and an incline (17).

4. A fastening device according to Claim 3, wherein the retention means (5) are formed by a shouldered finger (10)

5. A fastening device according to Claim 4, wherein the housing (6) is extended by a well (18) onto which the end of the shouldered finger (10) presses.

6. A fastening device according to any one of the above Claims, wherein the body (3) is provided with a passage (22) accommodating an extraction tool for the locking means.

## Patentansprüche

1. Vorrichtung zur Befestigung einer Sohle (2) auf dem Körper (3) eines Raupenkettenglieds, **dadurch gekennzeichnet, dass** sie aus einem einzigen Befestigungsmittel (5) auf Sohlenebene, einer im Körper (3) praktizierten formgerechten Aufnahme (6) und einem Blockiermittel (7) besteht, welches das Befestigungsmittel (5) und die Aufnahme (6) verbindet.

2. Vorrichtung zur Befestigung nach Anspruch 1, **dadurch gekennzeichnet, dass** das Blockiermittel (7) aus einer, in einer Aussparung (15) in der Sohle (2) oder dem Körper (3) gleitenden Gabel (23) besteht.

3. Vorrichtung zur Befestigung nach Anspruch 2, **dadurch gekennzeichnet, dass** die Aussparung (15) in Form einer blinden Aushöhlung in den Körper (3) eingelassen ist, diese bildet in Nähe der Aufnahme (6) einen Anschlag (16) und eine Rampe (17).

4. Vorrichtung zur Befestigung nach Anspruch 3, **dadurch gekennzeichnet, dass** das Befestigungsmittel (5) aus einem Zapfen (10) mit einem Kragen besteht.

5. Vorrichtung zur Befestigung nach Anspruch 4, **dadurch gekennzeichnet, dass** die Aufnahme (6) wird von einer Bohrung (18) verlängert, auf deren Rand sich der Kragen (10) stützt.

6. Vorrichtung zur Befestigung nach irgendeinem der vorgenannten Ansprüche, **dadurch gekennzeichnet, dass** der Körper (3) mit einer Öffnung (22) versehen ist, welche ein Werkzeug für den Ausbau des Befestigungsmittels aufnimmt.
